# EUROPÄISCHE PATENTSCHRIFT

(11) **EP 1 904 344 B1**
(45) Veröffentlichungstag und Bekanntmachung des Hinweises auf die Patenterteilung: **23.03.2011**
(21) Anmeldenummer: 06760767.1
(22) Anmeldetag: 31.05.2006
(51) Int. Cl.: B60R 21/01

(54) **Vorrichtung zur Aufprallerkennung eines Fußgängers mit einem Fahrzeug**
Device for detecting a collision between a pedestrian and a vehicle
Dispositif de detection d'un choc en cas de collision d'un vehicule avec un pieton

(30) Priorität: 12.07.2005 DE 102005032460
(43) Veröffentlichungstag der Anmeldung: 02.04.2008
(73) Patentinhaber: ROBERT BOSCH GMBH, 70442 Stuttgart (DE)
(72) Erfinder: KOCHER, Pascal, 70839 Gerlingen (DE); DUKART, Anton, 70839 Gerlingen (DE); GROEGER, Ulrike, Farmington Hills, Michigan 48331 (US); MACK, Frank, 70376 Stuttgart (DE); RECKNAGEL, Rolf-Juergen, 07747 Jena (DE); WELLHOEFER, Matthias, 70499 Stuttgart (DE); STEINKOGLER, Sascha, 79106 Freiburg (DE)
(86) Internationale Anmeldenummer: PCT/EP2006/062789
(87) Internationale Veröffentlichungsnummer: WO 2007/006609

(56) Entgegenhaltungen:
- DE-A1- 10 039 755
- DE-A1- 10 062 427
- DE-A1- 10 244 732
- DE-A1- 10 320 047
- DE-A1- 10 340 243

## Beschreibung

### Stand der Technik

Die Erfindung betrifft eine Vorrichtung zur Aufprallerkennung eines Fußgängers mit einem Fahrzeug nach der Gattung des unabhängigen Patentanspruchs.

Aus DE 100 39 755A1 ist es bereits bekannt, einen Kollisionssensor im Bereich der vorderen Stoßstange vorzusehen, um eine Fronthaube anzuheben, so dass bei einem Aufprall mit einem Fußgänger dieser derart geschützt wird.

Aus DE 103 40 243 A1 ist eine Sensoreinrichtung und ein Verfahren zur Erfassung einer äußeren Stoßbelastung an einem Fahrzeug bekannt. Dabei ist eine auf eine mechanische Verformung ansprechende Sensorleitung, ein die Sensorleitung aufnehmender Tragekörper und eine mit der Sensorleitung zusammenwirkende Messeinheit zur Bereitstellung eines Stoßsignals vorgesehen. Der Tragekörper weist eine mit der Sensorleitung in Eingriff stehende Verformung und Struktur zur abschnittsweise variierenden Druckkraftübertragung auf.

Aus DE 100 62 427 A1 ist eine Anordnung zur Aufprallerkennung für ein Fahrzeug bekannt. Dabei sind wenigstens zwei Druckkammern in unterschiedlichen Bereichen oder in unterschiedlichen Positionen gleicher Bereiche am oder im Fahrzeug angeordnet. Die wenigstens zwei Druckkammern sind über Verbindungsleitungen paarweise jeweils an einen Differenzdrucksensor angeschlossen. Dies ist für eine schnelle Seitencrashsensierung geeignet, aber auch zum Erkennen eines Überrollens, eines Überschlags, einer Kollission oder eines Aufpralls im Front- oder Heckbereich oder in sonstigen Bereichen des Fahrzeugs.

Aus DE 103 20 047 A1 ist eine Vorrichtung zur Aufprallerkennung bekannt, die wenigstens einen Draht aufweist. Der Aufprall wird anhand einer Widerstandsmessung in Abhängigkeit von einer Dehnung des Drahtes erkannt. Aus DE 102 44 732 A1 ist eine Vorrichtung zur Aufprallerkennung bekannt mit mindestens einem Sensor in einem als Hohlraum ausgebildeten Teil des Fahrzeugs, wobei der Sensor ein die Luftströmung im Hohlraum messender Luftströmungssensor ist und einer mit dem mindestens einen Sensor verbundenen Auswerteeinrichtung zum Auswerten der Signale aus dem mindestens einen Sensor und Erkennen eines Aufpralls, wobei in die Auswerteeinrichtung eine ansteigende Luftströmung, die aufgrund einer adiabatischen Zustandsänderung im Hohlraum auftritt und vom mindestens einen Luftströmungssensor gemessen wird, zur Aufprallerkennung verwendet wird. Dieser Sensor ist im Frontbereich angeordnet. Der Hohlraum ist insbesondere geschlossen.

### Vorteile der Erfinding

Die erfindungsgemäße Vorrichtung zur Aufprallerkennung eines Fußgängers mit einem Fahrzeug hat demgegenüber Vorteile es ist bekannt, dass der Stoßfänger nunmehr anhand eines Messsignals zur Charakterisierung des Stoßfängers bewertet wird und in Abhängigkeit von dieser Bewertung die Auswertung des Aufprallsignals beeinflusst wird. Das Aufprallsignal wird von einer Aufprallsensorik erfasst, die vorzugsweise als Beschleunigungssensorik ausgebildet ist, aber auch als Kontaktsensorik ausgebildet sein kann.

Mit dem Messsignal kann insbesondere auf den Zustand des Stoßfängers geschlossen werden, da durch Parkrempler oder andere nicht auslösende Kollisionen auf den Stoßfänger Einfluss auf dessen mechanische Eigenschaften genommen wird. Insbesondere kann dadurch die Steifigkeit des Stoßfängers beeinflusst werden. Die Steifigkeit hat jedoch einen erheblichen Einfluss auf die Aufprallsignale, insbesondere Beschleunigungssignale, die mittels der Aufprallsensorik im Stoßfängerbereich ermittelt werden. Daher ist eine Diagnose des Stoßfängers äußerst vorteilhaft, um ein verbessertes Auslöseverhalten zu gewährleisten. Auch Risse oder Brüche in der Stoßfängerverkleidung können derart ermittelt werden. Durch diese Auswertung ist es dann auch möglich dem Fahrer mitzuteilen, dass der Stoßfänger zur Gewährleistung der Funktionsfähigkeit der Fußgängeraufprallsensorik ausgewechselt werden muss.

Bekanntermaβen wird das Messsignal in Abhängigkeit von einer mechanischen Schwingung, die den Stoßfänger zumindest teilweise berührt hat, erzeugt. Als eine mechanische Schwingung kommt hier insbesondere Körperschall in Frage. Dabei kann die Aufprallsensorik, wenn sie beispielsweise als Beschleunigungssensorik konfiguriert ist, selbst als Körperschallempfänger eingesetzt werden. Mit Körperschall kann die Integrität, also der Zustand des Stoßfängers analysiert werden. Dies liegt daran, dass Risse oder andere Veränderungen die Ausbreitungsbedingungen im Stoßfänger verändern. Auch das Reflexionsverhalten des Stoßfängers kann dahingehend beeinflusst werden. Ein Sender für eine mechanische Schwingung wird vorzugsweise mittig zwischen den Beschleunigungssensoren eingebaut. Die Diagnose kann außerhalb des Fahrbetriebs stattfinden, insbesondere der Betriebsstart des Fahrzeugs ist ein geeigneter Zeitpunkt für die Messung.

Besonders vorteilhaft ist, dass das Körperschallsignal, mit dem der Stoßfänger beurteilt wird, durch das Bewegen der Fronthaube erzeugt wird, wobei das Bewegen der Fronthaube insbesondere das Schließen die Vorrichtung mittels Sensoren erkennt. Diese Sensoren finden erfindungskennzeichnend in einer Detektionseinrichtung Verwendung, die einen Öffnungszustand der Fronthaube erkennt. Ein Öffnungszustand ist das Geschlossen sein oder das Geöffnet sein der Fronthaube, wobei hier auch unterschiedliche Winkel der Öffnung der Fronthaube sensiert werden können. Als Detektionseinrichtung kann in einfachster Art und Weise ein Schalter vorgesehen sein. Damit der Stoßfänger auch regelmäßig analysiert werden kann, ist die Vorrichtung mit Ausgabemittel verbindbar, die den Fahrer auffordern, die Fronthaube zu öffnen bzw. zu schließen. Solche Ausgabemittel können Lautsprecher sein beispielsweise über das Autoradio oder auch eine Anzeige auf dem Kombiinstrument. In einfachster Art und Weise kann es auch eine Lampe sein, dessen Erleuchten dem Fahrer anzeigt, dass er die Fronthaube zu bewegen hat.

Durch die in den abhängigen Ansprüchen angegebenen Maßnahmen und Weiterbildungen sind vorteilhafte Verbesserungen der im unabhängigen Patentanspruch angegebenen Vorrichtung möglich.

Vorteilhafterweise ist für die Fronthaube eine Abstandshalterung vorgesehen, die die kinetische Energie der sich beispielsweise schließenden Fronthaube besser zum Stoßfänger leitet, so dass damit ein stärkeres Körperschallsignal erzeugt wird und damit eine bessere Diagnosemöglichkeit des Stoßfängers gewährleistet wird. Die Abstandshalterung kann einen oder mehrere Abstandshalter aufweisen, beispielsweise Gummimuffen mit definierten mechanischen Eigenschaften.

Vorteilhafterweise ist auch die Vorrichtung selbst in einer Signalisierungseinrichtung verbindbar, die dem Fahrer anzeigt, wie Funktionsfähig die Vorrichtung ist. Dies hängt beispielsweise von der Diagnose des Stoßfängers ab. Erlaubt also der Stoßfänger noch eine Beurteilung eines Fußgängeraufpralles oder nicht oder ob hier bereits erhebliche Einschränkungen hinzunehmen sind.

Alternativ ist es möglich, dass das Körperschallsignal auch durch eine gezielte Motorvibration angeregt wird. Dies kann vorteilhafter Weise beim Anlassen des Fahrzeugs geschehen. Die Vorrichtung kann dann mit dem Motorsteuergerät gekoppelt sein, um synchronisiert das Körperschallsignal aufnehmen zu können. Insbesondere kann hier bei der Analyse des Körperschallsignals ein Mustervergleich stattfinden, um das Körperschallsignal so leicht analysieren zu können. Dabei kann das Körperschallsignal nicht nur mit dem Körperschallsignal verglichen werden, das bei einem völlig funktionsfähigen Stoßfänger zu erwarten ist, sondern auch bei typischen Ausfällen vorliegt. Damit ist bereits eine genaue Analyse des Defekts des Stoßfängers möglich.

Weiterhin ist es möglich, dass das Körperschallsignal durch das Bewegen der Fahrzeugtüren verursacht wird, wobei auch hier eine Sensorik notwendig ist, um die Vorrichtung auf das Bewegen der Fahrzeugtüren zu synchronisieren, um das entsprechende Körperschallsignal aufnehmen zu können. Das Körperschallsignal wird vorzugsweise mit den Beschleunigungssensoren der Vorrichtung selbst aufgenommen. Es können jedoch aber auch dafür gesonderte Körperschallsensoren vorgesehen sein. Weitere Alternativen zur Erzeugung des Körperschallsignals sind die Scheinwerferreinigungsanlage und ein Ventilator, insbesondere der Kühlerventilator der sich unmittelbar neben der Verkleidung befindet. Die Scheinwerferreinigungsanlage kann beispielsweise durch ihre Motoren oder Pumpen - beispielsweise durch eine pulsförmige Anregung - das Körperschallsignal erzeugen, mit dem der Stoßfänger getestet wird.

Neben den oben beschriebenen Schallgebern sind auch Ultra- und/oder Infraschallgeber und/oder Schallgeber im hörbaren Frequenzbereich zur Erzeugung von mechanischen Schwingungen einsetzbar. Diese sind dann im Bereich der Fahrzeugfront eingebaut. Vorteilhafterweise kann jedoch auch eine Abstandssensorik, wie es Ultraschallsensoren sind, zur Erzeugung der mechansichen Schwingung verwendbar, um einen Zusatznutzen zu erhalten.

Als Alternative zur mechanischen Schwingung kann auch wenigstens ein Metalldraht gemessen werden, wobei der Metalldraht am Stoßfänger angeordnet ist. Dieser Metalldraht kann dünn als Faden ausgebildet sein, um eine entsprechende Empfindlichkeit auf Veränderungen des Stoßfängers aufzuweisen. Durch eine elektrische Messung kann vorzugsweise auf Veränderungen wie Risse oder Überdehnungen geschlossen werden. Dabei kann eine einfache Durchgangsprüfung oder eine Widerstandsmessung verwendet werden. Anstatt eines Metallfadens oder -drahtes können auch mehrere verwendet werden.

Das Aufprallsignal kann jedoch auch selbst das Messsignal sein. Wird ein Beschleunigungssensor verwendet, dann können damit selbst kleinste Kollisionen erkannt werden. Mit dem Beschleunigungssignal oder einem davon abgeleitetem Signal kann dann ein Schwellwertvergleich durchgeführt werden. Die Schwelle liegt zwischen der Rauschschwelle und der Auslöseschwelle oder -schwellen. Wird die Schwelle überschritten, dann wird beispielsweise ein Zähler inkrementiert oder dekrementiert, aber auch andere Zählweisen sind möglich. Anhand des Zählerstands wird die Auswertung des Aufprallsignals beeinflusst, denn mit jeder Kollision verändert sich der Stoßfänger bezüglich seiner Steifigkeit und damit die gemessenen Beschleunigungssignale. Die Beeinflussung kann dahin gehen, dass die Auslöseschwelle in Abhängigkeit von dem Zählerstand verändert wird. Auch eine Ausgabe bezüglich einer Prüfung des Stoßfängers an den Fahrer kann in Abhängigkeit von dem Zählerstand erfolgen.

Eine weitere vorteilhafte Ausgestaltung der erfindungsgemäßen Vorrichtung ist im Bereich des Stoßfängers ein Schalter vorzusehen, der in Abhängigkeit von dem Aufprall auf den Stoßfängers betätigt wird, so dass beispielsweise bei einem Parkrempler dieser Schalter geschlossen oder geöffnet wird und dies das Messsignal ist. Dabei ist die Schwelle dafür, dass die Betätigung des Schalter erfolgt, derart festgelegt, dass das Überschreiten der Schwelle einen Werkstattbesuch erforderlich macht, denn die Schädigung des Stoßfängers durch den Aufprall ist dann so groß, dass die Funktion des Fußgängerschutzsystems nicht mehr gewährleistet ist.

Eine vorteilhafte Weiterbildung des Schalters ist, dass der Schalter betätigt bleibt, wenn er einmal betätigt wurde. D.h., ist der Schalter einmal geschlossen, dann bleibt er geschlossen; ist er einmal geöffnet, dann bleibt er geöffnet.

Der Schalter kann als kinematische Schalter, beispielsweise als beschleunigungsempfindlicher Schalter, ausgeführt sein oder als Deformationsschalter. In einem Beschleunigungssensor als Aufprallsensor kann auch eine Sollbruchstelle als Schalter vorgesehen sein, wobei die Sollbruchstelle dann bricht, wenn ein entsprechend starker Aufprall auftritt und dann durch den Bruch eine Leitung unterbrochen wird, so dass das Brechen einfach detektierbar ist.

### Zeichnung

Ausführungsbeispiele der Erfindung sind in der Zeichnung dargestellt und werden in der nachfolgenden Beschreibung näher erläutert.

### Es zeigen

Figur 1 ein Blockschaltbild einer erfindungsgemäßen Vorrichtung,
Figur 2 eine Fahrzeugfront,
Figur 3 ein Kombiinstrument,
Figur 4 ein weiteres Blockschaltbild der erfindungsgemäßen Vorrichtung,
Figur 5a eine erste Konfiguration einer Umfeldsensorik mit Beschleunigungssensoren,
Figur 5b eine zweite Konfiguration einer Umfeldsensorik mit Beschleunigungssensoren,
Figur 6 ein weiteres Blockschaltbild und
Figur 7 eine Einbauposition der Schalter und Beschleunigungssensoren.

### Beschreibung

Zunehmend werden und müssen bei Kraftfahrzeugen Maßnahmen für den Fußgängerschutz vorgesehen sein. Dazu gehören auch Aufprallsensoren, die einen Fußgängeraufprall erkennen können. Geeignet hierfür sind Beschleunigungssensoren, die in dem Bereich des Stoßfängers angeordnet sind. Diese können beispielsweise symmetrisch links und rechts auf der Innenseite der Verkleidung des Stoßfängers integriert werden. Durch den Stoßfänger können jedoch die Beschleunigungssignale beeinflusst werden, insbesondere durch die Steifigkeit des Stoßfängers. Durch Parkrempler oder andere, nicht auslösende Aufprallsituationen kann sich aber die Steifigkeit oder andere mechanische Eigenschaften des Stoßfängers bzw. der Stoßfängerverkleidung ändern und damit Einfluss nehmen, was für Beschleunigungssignale durch die Beschleunigungssensoren gemessen werden.

Erfindungsgemäß wird daher vorgeschlagen, den Stoßfänger zu überwachen, also einer Diagnose zu unterziehen. Dies wird erfindungsgemäß durch ein Messsignal durchgerührt, das gezielt angeregt wird. Das Messsignal wird beispielsweise in Abhängigkeit von einer mechanischen Schwingung durch verschiedene Arten und Weisen angeregt. Insbesondere Körperschall ist hier besonders geeignet. Beispielsweise durch das Schließen der Fronthaube durch das Rütteln des Motors oder das Schließen von Fahrzeugtüren oder durch die Scheinwerferreinigungseinrichtung oder durch den Kühlungslüfter im Motorraum. Aber neben diesen Schallgebern kann auch ein Sender mittig zwischen den Beschleunigungssensoren angeordnet sein. Auch ein Ultraschallsensor, beispielsweise auch zur Umfeldsensierung kann zur Erzeugung der mechanischen Schwingung verwendet werden.

Daneben kann das Aufprallsignal selbst, wie oben ausgeführt, oder wenigstens ein Metalldraht zur Überprüfung des Stoßfängers verwendet werden.

Das Schließen der Motorhaube verursacht eine starke, reproduzierbare Vibration des Fahrzeugvorderbaus, wobei die Vibration mit Hilfe der Fußgängerschutzsensorik, also der Beschleunigungssensorik aufgezeichnet werden kann. Es ist möglich, daneben auch andere Körperschallsensoren zu verwenden, aber Beschleunigungssensoren selbst können als Körperschallsensoren eingesetzt werden. Das charakteristische Signal des Schließen der Motorhaube wird sich innerhalb eines bestimmten Toleranzbereichs befinden. Dabei sind charakteristisch eine definierte Symmetrie der Sensorsignale und ein bestimmter Wertebereich bestimmter mathematischer Operationen gemeint. Als mathematische Operationen eignen sich hierfür insbesondere das Intergral des Beschleunigungssignals bzw. das Integral des Absolutsignals.

Die Aufzeichnung der Signale kann mit einem Schalter, der den Öffnungszustand der Fronthaube detektiert, gestartet werden. Das heißt, das Signal des Schalters initiiert die Aufnahme des Körperschallsignals und somit die Diagnose des Stoßfängers, wenn das Körperschalsignal gelangt vom Motorraum zum Stoßfänger und wird durch den Stoßfänger gegebenenfalls verändert. Das so gewonnene Signal kann dann, durch übliche Methoden der Signalauswertung verarbeitet werden. Insbesondere kann hier ein Vergleich mit abgespeicherten Signalwerten vorgenommen werden, die in bestimmten Situationen zu erwarten sind, um damit eine Mustererkennung zu erreichen. Dies kann auch durch entsprechende Schwellwertabfragen erreicht werden. Eine Beschädigung des Front-Ends hat andere Schwingungseigenschaften der Stoßfängerverkleidung zur Folge, als ohne diese Beschädigung. Dies führt zu anderen Sensorsignalen, sobald eine Anregung mittels des Schließens der Fronthaube erfolgt.

Ein Abweichen der Sensorsignale und davon abgeleiteten Größen außerhalb eines bestimmten Toleranzbereiches resultiert in einer Ansteuerung beispielsweise einer Warnlampe. Dabei kann die Abweichung aufgrund einer Beschädigung der Frontendbestandteile mit bestimmten Wartungsarbeiten im Motorinnenraum, beispielsweise Ölstandskontrolle, das Auffüllen des Wassers für die Frontscheibe, Lampenwechsel usw., die der Fahrzeugbesitzer selbst ausführt, kombiniert werden. Es kann aber auch nach einem Misuse-Aufprall zum Beispiel ein Parkrempler oder in bestimmten Zeitintervallen, sofern die Motorfronthaube eine Zeit lang nicht geöffnet wurde, der Besitzer mittels einer Warnlampe aufgefordert werden, die Fronthaube zu öffnen und anschließend wieder zu schließen, so dass ein Diagnose des aktiven Fußgängerschutzsystems erfolgen kann.

Neben einer Warnlampe sind jedoch auch andere Ausgabemittel möglich, beispielsweise eine akustische Ausgabe; eine Ausgabe im Headupdisplay oder in einem Kombiinstrument oder über ein Display eines Navigationssystems oder eine andere Anzeige.

Auch ein Schalter kann erfindungsgemäß zur Diagnose des Stoßfängers eingesetzt werden. Kommt zu einem solchen Aufprall auf den Stoßfänger, der den Stoßfänger in seiner Steifigkeit beeinflusst, so dass ein Werkstattbesuch angezeigt ist, dann wird erfindungsgemäß der Schalter, der am Stoßfänger angeordnet ist, betätigt, so dass ein Messsignal vorliegt, in Abhängigkeit dessen dem Fahrer die Notwendigkeit eines Werkstattbesuches angezeigt wird.

In Abhängigkeit von der Veränderung des Stoßfängers, die mittels des Körperschallsignals detektiert wird, ist es weiterhin möglich, dass Einfluss genommen auf die Auswertung des Beschleunigungssignals des Fußgängerschutzsystems wird.

Das Beschleunigungssignal oder davon abgeleitete Signale, die das integrierte Signal oder ein abgeleitetes Beschleunigungssignal oder ein zweifach integriertes Beschleunigungssignal, werden einer Schnellwertuntersuchung üblicherweise unterzogen. Diese Schnellwerte werden ebenfalls üblicherweise dynamisch ausgelegt, das heißt in Abhängigkeit vom Beschleunigungssignal selbst oder anderen Parametern wird der Schwellwert oder die Schwellwerte verändert. Die Veränderung des Stoßfängers kann so zu einer Erhöhung der Schwellwerte führen, wenn man trotz der Beschädigung, beispielsweise eines Stoßfängers, den Betrieb des Fußgängerschutzsytems aufrechterhalten will.

Um die Reproduzierbarkeit des Fronthaubenverschließens zu gewährleisten, kann zwischen Fronthaube und Stoßfängerverkleidung, die fast immer aneinander anschließen, ein oder mehrere Abstandshalter, die Gummimuffen mit definierten mechanischen Eigenschaften befestigt werden. Über diese Abstandshalter wird nun die kinetische Energie der Fronthaube wohl definiert in die Stoßfängerverkleidung eingekoppelt und daher ein charakteristisches Sensorsignal erzeugt.

Eine weitere Diagnosemöglichkeit besteht in der Anregung der Fahrzeugfront durch eine gezielte Motorvibration zum Beispiel ein starkes Motorschütteln, die mittels des Motorsteuergeräts beim beispielsweise Anlassen für kurze Zeit erzeugt wird. Diese Motorvibration verursacht wiederum ein definiertes Signal in der Stoßfängerverkleidung, die mit den Fußgängerschutzbeschleunigungssensoren detektiert werden kann. Eine Beschädigung wird wie beim Fronthaubenverschließen detektiert. Weiteres kann während dieser Diagnose, das heißt während des Motorschüttelns der Fahrzeugbenutzer mit einer Informationslampe Schriftdisplay über den Diagnosevorgang informiert werden.

Die Anregung der Stoßfängerverkleidung kann wie gesagt mit den Motoren oder Pumpen der Scheinwerferreinigungsanlagen durch pulsförmige Anregung durch das entsprechende Steuergerät erfolgen. Eine weitere Anregungsmöglichkeit der Stoßfängerverkleidung besteht im ruckartigen Ansteuern des elektrischen Kühlerventilators, der sich unmittelbar neben der Verkleidung befindet.

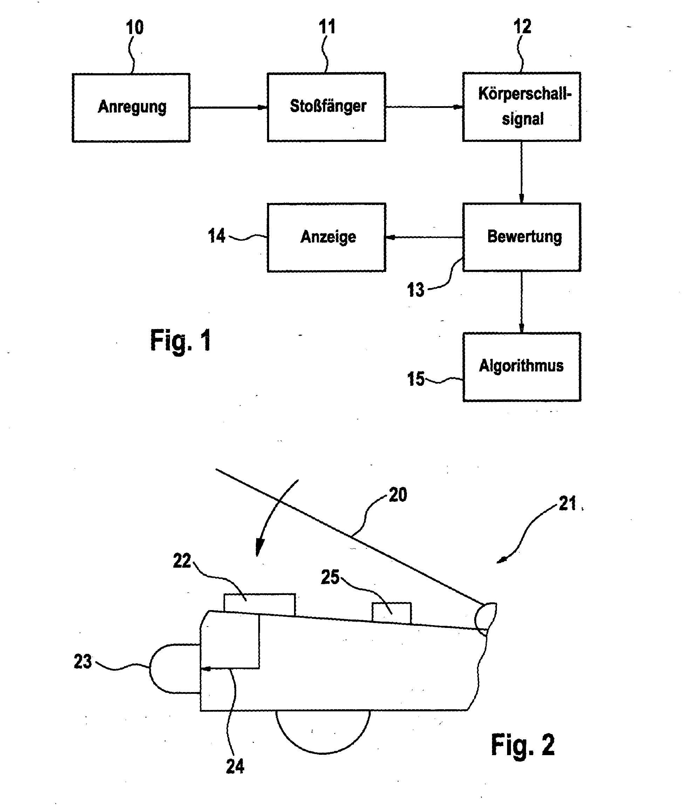

Figur 1 zeigt ein Blockschaltbild der erfindungsgemäßen Vorrichtung.
Im Block 10 wird ein Körperschallsignal als mechanische Schwingung erzeugt, es erfolgt also eine Anregung. Die Erzeugung kann wie oben dargestellt durch das Schließen der Fronthaube, durch ein Motorschütteln, durch das Schließen der Fahrzeugtüren oder Motoren und Pumpen der Scheinwerferreinigungseinrichtung oder durch den Kühlerventilator erzeugt werden. Dieses Körperschallsignal wird dann dem Stoßfänger 11 zugeführt, der dieses Körperschallsignal entsprechend seinen Eigenschaften verändert, so dass dann das Körperschallsignal 12 vorliegt und analysiert wird. Im Verfahrensschritt 13 erfolgt dann die Bewertung dieses Körperschallsignals. In Abhängigkeit von dieser Bewertung kann dann im Block 14 eine Anzeige erfolgen, beispielsweise dass der Stoßempfänger ausgetauscht werden soll, da seine Eigenschaften so sind, beispielsweise durch Risse oder Löcher, dass ein korrektes Funktionieren des Fußgängerschutzsystems nicht mehr gewährleistet werden kann.

Es ist weiterhin möglich, dass im Block 15 Einfluss auf den Auswertealgorithmus der Beschleunigungssensoren, die im Bereich der Stoßfänger angeordnet sind, genommen werden kann indem die Beschleunigungssignale oder davon abgeleitete Signale mit Schwellwerten verglichen werden, die in Abhängigkeit vom Zustand der Stoßfänger verändert werden. Das Körperschallsignal 12 kann hier mittels der Beschleunigungssensoren des Fußgängerschutzsystems selbst detektiert werden, es ist jedoch möglich, dass zusätzlich eigens konfigurierte Körperschallsensoren dafür verwendet werden. Das Signal wird im Steuergerät für das Fußgängerschutzsystem ausgewertet, sodass die entsprechende Rechenkapazität und Speicherkapazität darin bereitgestellt werden muss.
A) Eine Verbindung dieses Steuergeräts zu Anzeigemitteln bzw. zu den Aktoren, um das Anregungssignal zu erzeugen ist zu gewährleisten.
B) Eine Verbindung zu Sensoren die das Schließen der Fronthaube bzw. der Fahrzeugtüren anzeigen ist hier vorzusehen.

Figur 2 zeigt ein Front-End eines Fahrzeugs. Das Front-End 21 weist eine Fronthaube 20 auf, eine Abstandhalterung 22 und einen Schalter 25, der den Öffnungszustand der Fronthaube 20 anzeigt. Weiterhin ist ein Stoßfänger 23 vorgesehen, zu dem über die Abstandshalterung 22 die kinetische Energie 24 der Fronthaube 20 übertragen wird. Dadurch wird der Stoßfänger 23 zu Schwingungen angeregt und dieses daraus resultierende Körperschallsignal kann dann ausgewertet werden.

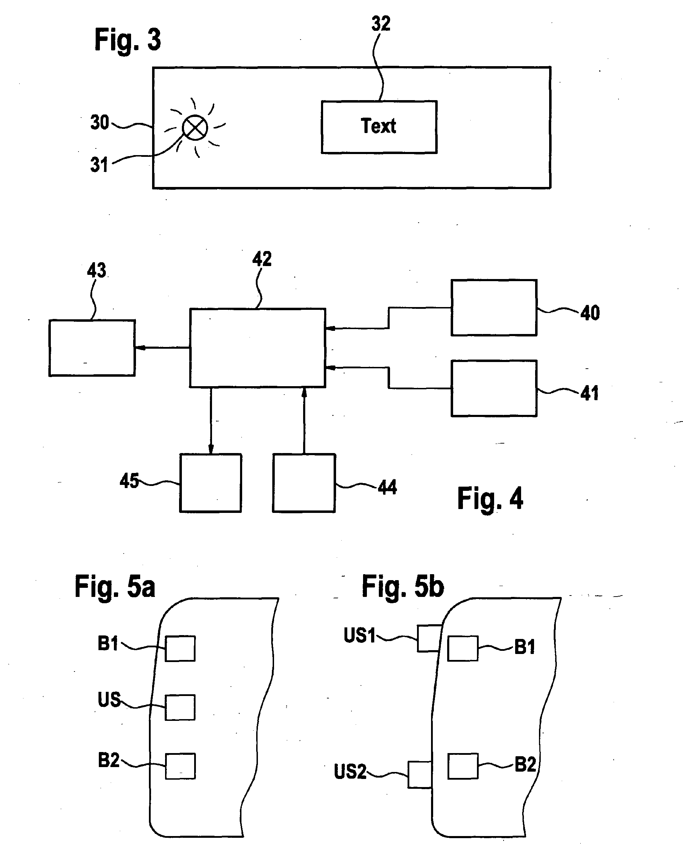

Figur 3 zeigt ein Kombiinstrument im Fahrzeug in einfacher schematischer Darstellung. Im Feld 32 ist ein Display symbolisiert, das entweder den Fahrer auffordert eine Fahrzeugtür zu öffnen und zu schließen und das entsprechende Signal zu erzeugen oder auch die Fronthaube oder ihn über den Zustand des Stoßfängers informiert, wenn die Diagnose bereits durchgeführt wurde. Auch durch eine Warnlampe 31 kann dem Fahrer signalisiert werden, dass entweder der Stoßfänger auszutauschen ist, oder dass er aktiv werden muss, um die Diagnose durchzuführen, also die Fronthaube öffnen und wieder schließen oder eine Fahrzeugtür öffnen und wieder schließen.

Figur 4 zeigt in einem Blockschaltbild die erfindungsgemäße Vorrichtung, also das Fußgängerschutzsystem. Hier sind beispielhaft zwei Beschleunigungssensoren 40 und 41 dargestellt, die im Bereich des Stoßfängers angeordnet sind. Es können mehr Stoßfänger angeordnet werden, insbesondere ein mittig angeordneter Stoßfänger, diese Stoßfänger können auch in verschiedenen Sensierungsrichtungen empfindlich sein. Hier sind sie beispielhaft in Fahrzeuglängsrichtung empfindlich. Die Beschleunigungssensoren 40 und 41 mit entsprechender Signalverstärkung und Digitalisierung sind über Signalübertragungsleitungen mit einem Steuergerät 42 verbunden, das einen Prozessor beispielsweise einen Microcontroller und Speichermittel aufweist und insbesondere Schnittstellenbausteine, um die Daten von den Beschleunigungssensoren aufnehmen zu können. Diese Daten werden dann im Prozessor verarbeitet, wenn es sich um einen Aufprall handelt wird mit dem Auslösealgorithmus detektiert, ob Personenschutzmittel 43 wie Fahrerairbags oder die Aktivierung der Fronthaube erfolgen soll. Es ist jedoch auch möglich, wenn sich das Fußgängerschutzsystem im Diagnosenmodus befindet, beispielsweise indem das Steuergerät 42 selbst über Ausgabemittel 45 anzeigt, dass der Fahrer aktiv werden soll, um das Körperschallsignal zu erzeugen, oder wenn das Körperschallsignal automatisch angeregt wird, um den Stoßfänger zu testen. Wird über den Sensor 44 dieses dem Steuergerät 43 übermittelt, dann wird das Körperschallsignal, das mit dem Beschleunigungssensor 40 und 41 aufgenommen wird, analysiert. Diese Analyse erfolgt vorzugsweise durch Vergleich mit abgespeicherten Körperschallsignalen die charakteristisch für einen funktionierenden Stoßempfänger oder einen beschädigten Stoßfänger sin. In-Abhängigkeit davon wird dem Fahrer signalisiert, den Stoßfänger auszutauschen, oder es wird auf der Algorithmus entsprechend verändert beispielsweise durch eine Anhebung von Schwellwerten.

Fig. 5a zeigt eine erste Konfiguration der Beschleunigungssensoren und eines Ultraschallgebers. An der Fahrzeugfront sind symmetrisch zwei Beschleunigungssensoren B1 und B2 angeordnet, um einen Fußgängeraufprall zu detektieren. Mittig zwischen den beiden Beschleunigungssensoren ist ein Ultraschallgeber vorgesehen, der den Stoßfänger mit einer mechanischen Schwingung beaufschlagen soll, um den Zustand des Stoßfängers zu überwachen.

Fig. 5b zeigt eine weitere Konfiguration der Beschleunigungssensoren und von einer Abstandsensorik. Gleiche Bezugszeichen bezeichnen gleiche Elemente. Nunmehr sind zwei Ultraschallsensoren US1 und US2 vorgesehen, die als Abstandssensoren konfiguriert sind. Diese Ultraschallsensoren US1 und US2 sind zur Erzeugung der mechanischen Schwingung vorgesehen und müssen daher so konfiguriert sein, dass die mechanischen Schwingungen den Stoßfänger durchlaufen.

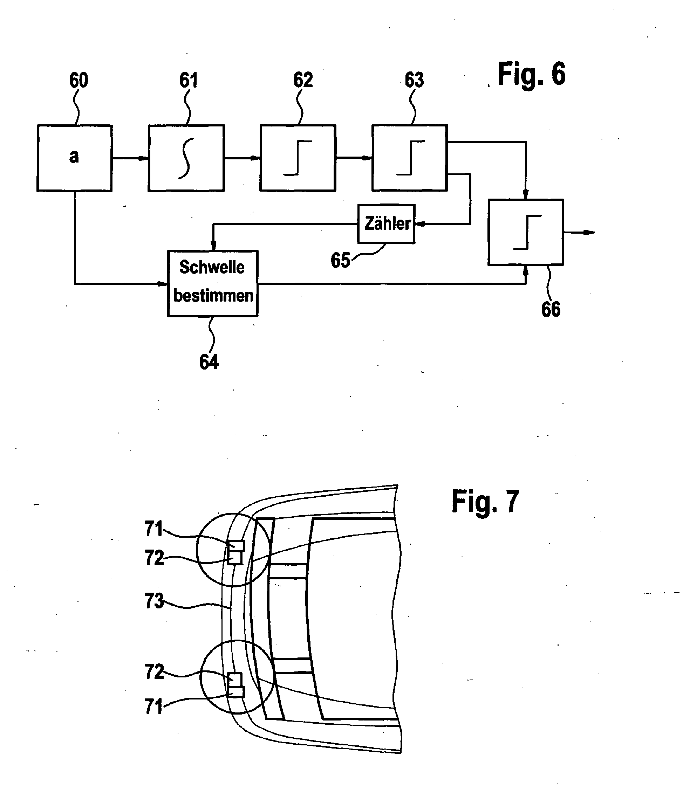

Fig. 6 zeigt in einem Blockschaltbild die Verwendung des Auftprallsignals als Messsignal. Dabei wird in Block 60 das Beschleunigungssignal von der Beschleunigungssensorik aufgenommen. In Block 61 wird das Beschleunigungssignal integriert und in Block 62 mit einer vorgegebenen Rauschschwelle verglichen. In Block 63 wird das integrierte Beschleunigungssignal mit einer Schwelle verglichen, die zwischen Rauschschwelle und Auslöseschwelle liegt, um eine Nichtauslösekollision zu identifizieren. In Abhängigkeit von dem Überschreiten dieser Schwelle wird in Block 65 ein Zähler inkrementiert, wobei in Abhängigkeit vom Zählerstand die Auslöseschwelle in Block 64 erhöht wird. Vorliegend wird die Auslöseschwelle aus dem Beschleunigungssignal a bestimmt. Dies kann jedoch auch anders geschehen. In Block 66 wird schließlich die so bestimmte Auslöseschwelle mit dem integrierten

Beschleunigungssignal verglichen. Ist die Auslöseschwelle überschritten, dann kommt es zur Auslösung von Schutzmitteln.

Fig. 7 zeigt die Einbauposition der Sicherheitsschalter 71 und der Beschleunigungssensoren 72. Sowohl die Sicherheitsschalter 71 als auch die Beschleunigungssensoren 72 sind am Stoßfänger 73 angebracht.

Die Sicherheitsschalter 71 arbeiten beispielsweise nach einem ähnlichen Pronzip wie der Hamlin-Schalter. Eine Masse, hier ein Dauermagnet wird von einer Feder in einer Ruhestellung gehalten. Wird die Verzögerung durch eine Aufprall groß genug, dann drückt der Dauermagnet durch seine Trägheit die Feder zusammen und bewegt sich nach links. Dabei bewirkt sein Magnetfeld das Schließen eines Schutzgaskontakts im Innern des Schalters.

Vorteilhafterweise ist der Schalter 71 hier so kofiguriert, dass der nach einem Parkrempler nicht mehr öffnet, sondern geschlossen bleibt.

Wird das Fahrzeug mit einem geschlossenen Schalter 71 gestartet, dann wird die Warnleuchte für den Werkstattbesuch angesteuert. In der Werkstatt kann dann der Stoßfänger 73 überprüft werden.

Die Feder und die Masse des Schalter werden so gewählt, dass ein Kontakt bei einer solchen Beschleunigung auftritt, bei der der Stoßfänger 73 derart geschädigt wird, dass es danach zu einer Beeinträchtigung der Systemfunktion kommen kann. Dass also dass Fußgängerschutzsystem nicht mehr korrekt arbeitet.

Besonders vorteilhaft ist es, zwei oder mehr solcher Schalter in den Stoßfänger zu integrieren. Diese können wie in Fig. 7 angedeutet auch in die Beschleunigungssensorik selbst integriert sein.

Alternativ zu den Hamlinartigen Prinzip können auch andere Prinzipien verwendet werden, beispielsweise Elemente, die bei einer bestimmten Belastung brechen und so die Beschädigung des Stoßfängers anzeigen. So können beispielsweise Sollbruchstellen im Beschleunigungssensor integriert werden, die genau dann zu einer detektierbaren Zerstörung führen, wenn der Stoßfänger zu stark geschädigt ist. Eine weitere Realisierungsmöglichkeit für den Schalter ist ein lineares Potentiometer, das eine Wegänderung in eine Widerstandsänderung umwandelt, die wiederum einfach elektrisch detektierbar ist. Im Vordergrund bei diesem Meßprinzip ist die Messung einer Deformation des Stoßfängers mittels eines Deformationsschalters.

Außerdem können zu diesem Diagnosezweck jegliche Schalter, sogenannte Upfront-Switches, verwendet werden,die zur Erkennung und Bestimmung von Frontaufprallen eingesetzt werden. Dazu muss die für den Frontaufprall geeignete Einbauposition nicht geändert werden, sondern es muss lediglich eine zusätzliche Schwelle vorgesehen werden.

## Patentansprüche

1. Vorrichtung zur Aufprallerkennung eines Fußgängers mit einem Fahrzeug, wobei die Vorrichtung im Fahrzeug eine Aufprallsensorik (40, 41) im Stoßfänger (23) zur Erfassung eines Fußgängeraufpralls aufweist, wobei die Vorrichtung derart konfiguriert ist, dass die Vorrichtung den Stoßfänger (23) anhand eines Messsignals bewertet und in Abhängigkeit von dieser Bewertung ein von einem Aufprallsignal der Aufprallsensorik (40, 41) abgeleiteten Signal einer Beurteilung unterzieht, ob Schutzmittel (43) zu aktivieren sind, wobei die Vorrichtung das Messsignal in Abhängigkeit von einer mechanischen Schwingung im Stoßfänger (23) ermittelt, wobei die Vorrichtung derart konfiguriert ist, dass die Vorrichtung das Messsignal beim Bewegen der Fronthaube (20) beurteilt, **dadurch gekennzeichnet, dass** eine Detektionseinrichtung (25) vorgesehen ist, die einen Öffnungszustand der Fronthaube (20) erkennt, wobei die mechanische Schwingung durch das Schließen oder das Öffnen der Fronthaube (20) angeregt wird.

2. Vorrichtung nach Anspruch 1, **dadurch gekennzeichnet, dass** die Detektionseinrichtung einen Schalter (25) aufweist.

3. Vorrichtung nach Anspruch 1, **dadurch gekennzeichnet, dass** die Vorrichtung mit Ausgabemitteln (31, 32, 45) verbindbar ist, die den Fahrer auffordern die Fronthaube (20) zu öffnen und zu schließen.

4. Vorrichtung nach Anspruch 1, **dadurch gekennzeichnet, dass** für die Fronthaube eine Abstandshalterung (22) vorgesehen ist, die derart eingebaut ist, dass über die Abstandshalterung eine kinetische Energie der Fronthaube (20) zum Stoßfänger (23) übertragen wird.

5. Vorrichtung nach Anspruch 1, **dadurch gekennzeichnet, dass** die Vorrichtung mit einer Signalisierungseinrichtung (31, 32) verbindbar ist, wobei mit der Signalisierungseinrichtung eine Funktionsfähigkeit der Vorrichtung angezeigt wird.

6. Vorrichtung nach Anspruch 1, **dadurch gekennzeichnet, dass** die mechanische Schwingung durch eine Motorvibration angezeigt wird.

7. Vorrichtung nach Anspruch 5, **dadurch gekennzeichnet, dass** die Vorrichtung derart konfiguriert wird, dass die Vorrichtung die Motorvibration beim Anlassen des Fahrzeugs auslöst.

8. Vorrichtung nach Anspruch 1, **dadurch gekennzeichnet, dass** die mechanische Schwingung durch das Bewegen einer Fahrzeugtür erzeugt wird.

9. Vorrichtung nach Anspruch 1, **dadurch gekennzeichnet, dass** eine Scheinwerferreinigungsanlage zur Erzeugung der mechanischen Schwingung konfiguriert ist.

10. Vorrichtung nach Anspruch 1, **dadurch gekennzeichnet, dass** ein Ventilator zur Erzeugung der mechanischen Schwingung mit der Vorrichtung koppelbar ist.

11. Vorrichtung nach Anspruch 1, **dadurch gekennzeichnet, dass** ein Schallgeber im Bereich der Fahrzeugfront zur Erzeugung der mechanischen Schwingung vorgesehen ist, der die Schwingung im Ultraschall und/oder im Infraschall und/oder im hörbaren Frequenzbereich erzeugt.

12. Vorrichtung nach Anspruch 11, **dadurch gekennzeichnet, dass** der Ultraschallgeber als Abstandssensorik konfiguriert ist.

13. Vorrichtung nach Anspruch 1, **dadurch gekennzeichnet, dass** das Messsignal in Abhängigkeit von einer Messung eines Metalldrahtes, der am Stoßfänger befestigt ist, erzeugt wird.

14. Vorrichtung nach Anspruch 1, **dadurch gekennzeichnet, dass** das Messsignal das Aufprallsignal ist, wobei das Aufprallsignal mit einer Schwelle verglichen wird, die zwischen einer Rauschschwelle und einer Auslöseschwelle liegt, und bei jedem Überschreiten der Schwelle ein Zähler verändert wird, wobei die Beurteilung des Aufprallsignals in Abhängigkeit von einem Stand des Zählers vorgenommen wird.

15. Vorrichtung nach Anspruch 1, **dadurch gekennzeichnet, dass** die Vorrichtung das Messsignal von wenigstens einem Schalter (71) erhält, der im Bereich des Stoßfängers (73) angeordnet ist, wobei der wenigstens eine Schalter (71) in Abhängigkeit von dem Aufprall auf den Stoßfänger (73) betätigt wird.

16. Vorrichtung nach Anspruch 15, **dadurch gekennzeichnet, dass** der wenigstens eine Schalter (71) derart konfiguriert ist, dass der wenigstens eine Schalter (71) nach der Betätigung des wenigstens einen Schalters (71) betätigt bleibt.

17. Vorrichtung nach Anspruch 15, **dadurch gekennzeichnet, dass** der wenigstens eine Schalter (71) eine Sollbruchstelle aufweist, die in Abhängigkeit von dem Aufprall bricht, und in Abhängigkeit von diesem Bruch das Messsignal erzeugt wird.

18. Vorrichtung nach Anspruch 15, **dadurch gekennzeichnet, dass** der Schalter (71) als Deformationsschalter ausgebildet ist, wobei ein Potentiometer vorgesehen ist, das eine Deformation in eine Widerstandsänderung als Messsignal wandelt.

## Claims

1. Device for detecting a collision between a pedestrian and a vehicle, wherein the device in the vehicle has an impact sensor system (40, 41) in the bumper (23) for detecting a collision with a pedestrian, wherein the device is configured in such a way that the device evaluates the bumper (23) on the basis of a measurement signal and, as a function of this evaluation, subjects a signal derived from a collision signal of the collision sensor system (40, 41) to an assessment to determine whether protection means (43) are to be activated, wherein the device determines the measurement signal as a function of a mechanical oscillation in the bumper (23), wherein the device is configured in such a way that the device assesses the measurement signal during the movement of the front bonnet (20), **characterized in that** a detection apparatus (25) is provided which detects an opening state of the front bonnet (20), wherein the mechanical oscillation is excited by the closing or the opening of the front bonnet (20).

2. Device according to Claim 1, **characterized in that** the detection apparatus has a switch (25).

3. Device according to Claim 1, **characterized in that** the device can be connected to output means (31, 32, 45) which request the driver to open and close the front bonnet (20).

4. Device according to Claim 1, **characterized in that** a spacer mount (22) is provided for the front bonnet, which spacer mount is configured in such a way that kinetic energy from the front bonnet (20) is transmitted to the bumper (23) via the spacer mount.

5. Device according to Claim 1, **characterized in that** the device can be connected to a signalling apparatus (31, 32), wherein a functional capability of the device is displayed with the signalling apparatus.

6. Device according to Claim 1, **characterized in that** the mechanical oscillation is displayed by a motor vibration.

7. Device according to Claim 5, **characterized in that** the device is configured in such a way that the device triggers the motor vibration when the vehicle is started.

8. Device according to Claim 1, **characterized in that** the mechanical oscillation is generated by the movement of a vehicle door.

9. Device according to Claim 1, **characterized in that** a headlight cleaning system is configured for generating the mechanical oscillation.

10. Device according to Claim 1, **characterized in that** a fan can be coupled to the device in order to generate the mechanical oscillation.

11. Device according to Claim 1, **characterized in that** a sound signal generator is provided in the region of the front of the vehicle for generating the mechanical oscillation and it generates the oscillation in the ultrasonic sound range and/or in the infrasonic sound range and/or in the audible frequency range.

12. Device according to Claim 11, **characterized in that** the ultrasonic sound generator is configured as a distance sensor system.

13. Device according to Claim 1, **characterized in that** the measurement signal is generated as a function of a measurement of a metal wire which is attached to the bumper.

14. Device according to Claim 1, **characterized in that** the measurement signal is the collision signal, wherein the collision signal is compared with a threshold which is between a sound threshold and a triggering threshold, and whenever the threshold is exceeded a counter is changed, wherein the assessment of the collision signal is performed as a function of a reading of the counter.

15. Device according to Claim 1, **characterized in that** the device receives the measurement signal from at least one switch (71) which is arranged in the region of the bumper (73), wherein the at least one switch (71) is activated as a function of the impact on the bumper (73).

16. Device according to Claim 15, **characterized in that** the at least one switch (71) is configured in such a way that the at least one switch (71) remains activated after the activation of the at least one switch (71).

17. Device according to Claim 15, **characterized in that** the at least one switch (71) has a predetermined break point which breaks as a function of the impact, and the measurement signal is generated as a function of this break.

18. Device according to Claim 15, **characterized in that** the switch (71) is embodied as a deformation switch, wherein a potentiometer is provided which converts a deformation into a change of resistance as a measurement signal.

## Revendications

1. Dispositif de détection d'une collision entre un piéton et un véhicule, le dispositif présentant dans le véhicule un ensemble de détecteurs (40, 41) de collision disposé dans le pare-chocs (23) pour détecter une collision avec un piéton, le dispositif étant configuré de telle sorte que le dispositif évalue le pare-chocs (23) à l'aide d'un signal de mesure et en fonction de cette évaluation, décide à partir d'un signal déduit du signal de collision délivré par l'ensemble de détecteurs (40, 41) de collision une conclusion si des moyens de protection (43) doivent être activés, le dispositif déterminant le signal de mesure en fonction de la présence d'une oscillation mécanique dans le pare-chocs (23), le dispositif étant configuré de telle sorte que le dispositif juge le signal de mesure en cas de déplacement du capot avant (20), **caractérisé en ce qu'**un système de détection (25) est prévu et détecte l'état d'ouverture du capot avant (20), l'oscillation mécanique étant excitée par la fermeture ou l'ouverture du capot avant (20).

2. Dispositif selon la revendication 1, **caractérisé en ce que** le système de détection présente un commutateur (25).

3. Dispositif selon la revendication 1, **caractérisé en ce que** le dispositif peut être relié à des moyens d'émission (31, 32, 45) qui invitent le conducteur à ouvrir ou à fermer le capot avant (20).

4. Dispositif selon la revendication 1, **caractérisé en ce qu'**il présente pour le capot avant un écarteur (22) monté de telle sorte que l'énergie cinétique du capot avant (20) soit transférée au pare-chocs (23) par l'intermédiaire de l'écarteur.

5. Dispositif selon la revendication 1, **caractérisé en ce que** le dispositif peut être relié à un système de signalisation (31, 32), le dispositif de signalisation affichant le bon fonctionnement du dispositif.

6. Dispositif selon la revendication 1, **caractérisé en ce que** l'oscillation mécanique est excitée par la vibration d'un moteur.

7. Dispositif selon la revendication 5, **caractérisé en ce que** le dispositif est configuré de telle sorte que le dispositif déclenche la vibration du moteur lors du démarrage du véhicule.

8. Dispositif selon la revendication 1, **caractérisé en ce que** l'oscillation mécanique est formée par le déplacement d'une porte du véhicule.

9. Dispositif selon la revendication 1, **caractérisé en ce qu'**une installation de nettoyage des phares est configurée pour former l'oscillation mécanique.

10. Dispositif selon la revendication 1, **caractérisé en ce qu'**un ventilateur qui forme l'oscillation mécanique peut être accouplé au dispositif.

11. Dispositif selon la revendication 1, **caractérisé en ce qu'**un émetteur acoustique est prévu dans la zone occupée par l'avant du véhicule pour former l'oscillation mécanique et forme l'oscillation dans la plage des ultrasons, dans la plage des infrasons et/ou dans la plage des fréquences audibles.

12. Dispositif selon la revendication 11, **caractérisé en ce que** l'émetteur d'ultrasons est configuré comme ensemble de détecteurs de distance.

13. Dispositif selon la revendication 1, **caractérisé en ce que** le signal de mesure est formé en fonction d'une mesure d'un fil métallique fixé sur le pare-chocs.

14. Dispositif selon la revendication 1, **caractérisé en ce que** le signal de mesure est le signal de collision, le signal de collision étant comparé à un seuil situé entre un seuil de bruit et un seuil de déclenchement, et **en ce que** lors de chaque dépassement du seuil, un compteur est modifié, la décision concernant le signal de collision étant prise en fonction de l'état du compteur.

15. Dispositif selon la revendication 1, **caractérisé en ce que** le dispositif reçoit le signal de mesure d'au moins un commutateur (71) disposé dans la zone occupée par le pare-chocs (73), le ou les commutateurs (71) étant actionnés en fonction d'une collision avec le pare-chocs (73).

16. Dispositif selon la revendication 15, **caractérisé en ce que** le ou les commutateurs (71) sont configurés de telle sorte que le ou les commutateurs (71) restent actionnés après l'actionnement du ou des commutateurs (71).

17. Dispositif selon la revendication 15, **caractérisé en ce que** le ou les commutateurs (71) présentent un emplacement de rupture préférentielle qui se rompt en fonction de la collision, le signal de mesure étant formé en fonction de cette rupture.

18. Dispositif selon la revendication 15, **caractérisé en ce que** le commutateur (71) est configuré comme commutateur de déformation et présente un potentiomètre qui convertit une déformation en une modification de résistance qui est utilisée comme signal de mesure.
